# EUROPEAN PATENT SPECIFICATION

(11) **EP 2 390 980 B1**
(45) Date of publication and mention of the grant of the patent: **02.01.2013**
(21) Application number: 10164502.6
(22) Date of filing: 31.05.2010
(51) Int. Cl.: H02H 1/00, H02H 7/26, H02H 9/08

(54) **Method and device for detecting an intermittent earth fault in a multiple feeder system**
Verfahren und Vorrichtung zur Detektion eines intermittierenden Erdschlusses in einem Mehrfacheinspeisungssystem
Procédé et dispositif pour détecter un défaut de terre intermittent dans un système d'alimentation multiple

(43) Date of publication of application: 30.11.2011
(73) Proprietor: Netcontrol Oy, 00380 Helsinki (FI)
(72) Inventor: Akke, Magnus, SE-231 97, Klagstorp (SE)
(74) Representative: Hjalmarsson, Magnus Axel

(56) References cited:
- EP-A1- 1 526 621
- WO-A1-02/15358
- DE-B3- 10 302 451
- DE-T2- 60 120 698

## Description

### Technical field

The present disclosure relates to a method and a corresponding monitoring device for detecting earth faults in a power distribution system, wherein a busbar feeds power to a plurality of feeding loops, wherein a distribution grid feeds power to the busbar via a transformer, the secondary side of which is connected to earth via a Petersen coil, and wherein the Petersen coil voltage and the feeding loop currents are measured to provide an earth fault indication.

### Background

Such a method is described e.g. in EP 1526621, where the flanks of the feeding loop currents and the Petersen coil voltage are compared in the moment when the intermittent fault occurs. It is correctly assumed that the polarity of the flank in the faulty cable's current will differ from all the other currents, and that cable may be detected has exhibiting an earth fault accordingly.

One problem associated with such a scheme is that it is not always reliable.

### Summary of invention

One object of the present disclosure is therefore to provide a more reliable detecting method and a monitoring device capable of carrying out that method. This object is achieved by means of a method as defined in claim 1 and a corresponding monitoring device as defined in claim 7.

More specifically, the initially mentioned method then involves providing the first order derivative of the Petersen coil voltage, correlating this first order derivative with each feeding loop current, and indicating the feeding loop with the highest correlation as having an earth fault.

This provides a more reliable detection, as the method is relieved from actually finding the flanks with information that is sufficient for making the correct determination. It is to be noted that, temporarily during a transient, the flank information may be such that an incorrect decision is made due to different impedances in the system. This does however not affect the presently disclosed method, which carries out a correlation over time. Despite this, a determination may be made based on one single intermittent fault.

The indicating may include comparing the correlation results with a first, positive threshold, and indicating the feeding loop exceeding the first threshold as exhibiting an earth fault.

Alternatively, the correlation results may be integrated for a period of time and the feeding loop with the highest integrated correlation is indicated as exhibiting an earth fault.

The Petersen coil voltage signal may be high-pass filtered to remove the grid frequency, or the differentiated signal may be set to zero unless it exceeds a second threshold.

The indication may be triggered by the differentiated signal exceeding a third threshold.

The present disclosure further relates to a monitoring device devised to carry out the above-indicated method. In general, the monitoring device includes functional blocks that are adapted to carry out the actions of the method.

### Brief description of the drawings

Fig 1 schematically illustrates a power distribution system.
Fig 2 shows a flow chart for a method according to the present disclosure.
Fig 3 illustrates schematically the layout of a monitoring device.
Fig 4 shows a graph of a neutral voltage during a time frame of 1 ms where an intermittent earth fault occurs.
Fig 5 shows the first order derivative of the neutral voltage during the time frame.
Fig 6 shows the currents of a set of feeder cables during the time frame.
Fig 7 shows the correlation of the each of the cable currents of fig 6 with the first order derivative of the neutral voltage of fig 5.
Fig 8 shows the integrals of each of the signals depicted in fig 7.

### Detailed description

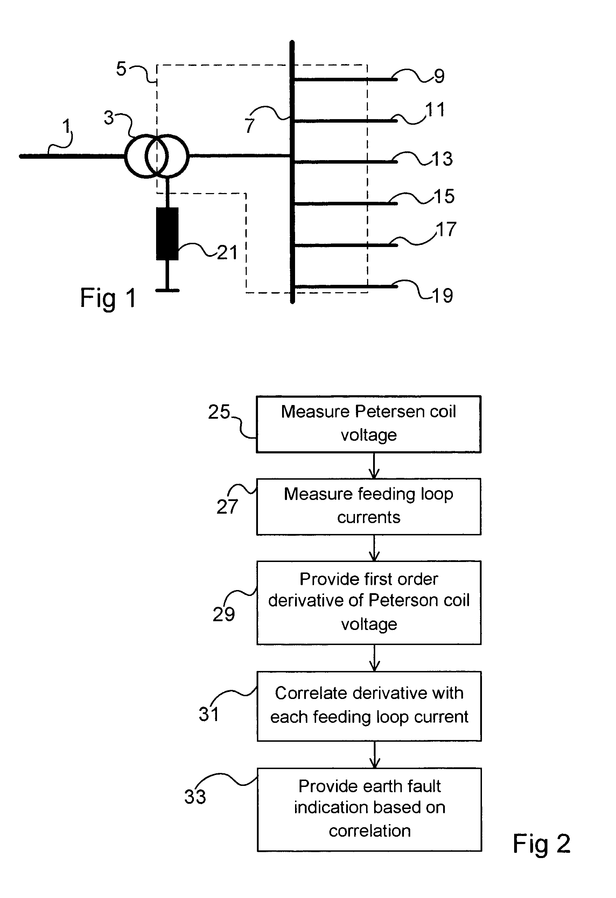

Fig 1 illustrates a power distribution system where the detecting method and the monitoring device of the present disclosure may be used. A high voltage grid 1, in the illustrated case e.g. 132kV, is connected via a power transformer 3, to a medium voltage distribution system 5, which in the illustrated case runs with a 20kV voltage. The medium voltage distribution system 5 has a busbar 7, with a number of, usually open, feeding loops 9, 11, 13, 15, 17, 19. Each feeding loop typically has a plurality of substation power transformers (not shown) connected thereto, providing for instance 400V power to resident buildings, offices, etc.

The secondary side of the power transformer, which has a Y configuration, is connected to earth via a Petersen coil 21, as is well known per se. There is thus provided a non-effectively grounded substation.

The feeding loops may often comprise buried, insulated cables. In three-phase systems, the buried cables may include both three-phase cables, having a common enclosure, and sets of three individual single-phase cables. One problem associated with such buried cables is earth faults, which occur when the insulation becomes deteriorated due to ageing and/or damage. Often, the insulation may have imperfections which may cause a short-circuit between one phase of the cable and earth. Usually, in such cases, a plurality of temporary earth faults with very short durations (typically 0.5-2 ms), sometimes called intermittent or re-striking earth faults, occur over a number of days or weeks before the short circuit becomes permanent and the feeding loop must be disconnected. Since the temporary earth faults are so short in duration, the breaker (not shown) of the feeding loop with the fault does not usually disconnect the feeding loop.

Thus, if the preceding earth faults with short duration can be detected, the grid operator can undertake necessary measures before the cable breaks down permanently. Thereby the breakdown can be prevented or the damage caused by the breakdown can be minimized.

In the following there will be described a simple but yet reliable monitoring device that is able of detecting intermittent earth faults, such that a power system operator can undertake different actions so as to minimize the damage caused by the malfunctioning cable.

The object of the method to be disclosed is to decide which feeding loop exhibits an intermittent earth fault among all the feeding loops fed by the transformer.

The inventor of the present disclosure has found that there is a great correlation between, on the one hand, the first order derivatives of the voltage over the Petersen coil 21 and, on the other hand, the current of the feeder cable exhibiting an intermittent fault. Therefore a very basic method, which may be altered and expanded in different ways as will be described later, can be summarized as follows with regard to the flow chart illustrated in fig 2.

Briefly, the method includes the following actions. Although those actions are shown in a particular order, it is evident that some of the actions can have a reversed order or may be carried out simultaneously.

The method thus includes measuring 25 the Petersen coil voltage, i.e. the neutral point voltage of the busbar. Further, the feeding loop currents are measured 27. This implies the measuring of each cable's zero current, i.e. in a three phase system, the vector sum of the current of each phase.

The first order derivative or differential of the neutral point voltage is provided 29, and is correlated 31 with each of the monitored feeding loop zero currents. Based on these correlations, it is indicated 33 which one of the feeding loops that exhibited an earth fault. In general, the faulty loop will over time exhibit a positive correlation with the neutral point voltage derivative, while the non-faulty loops will have a negative correlation.

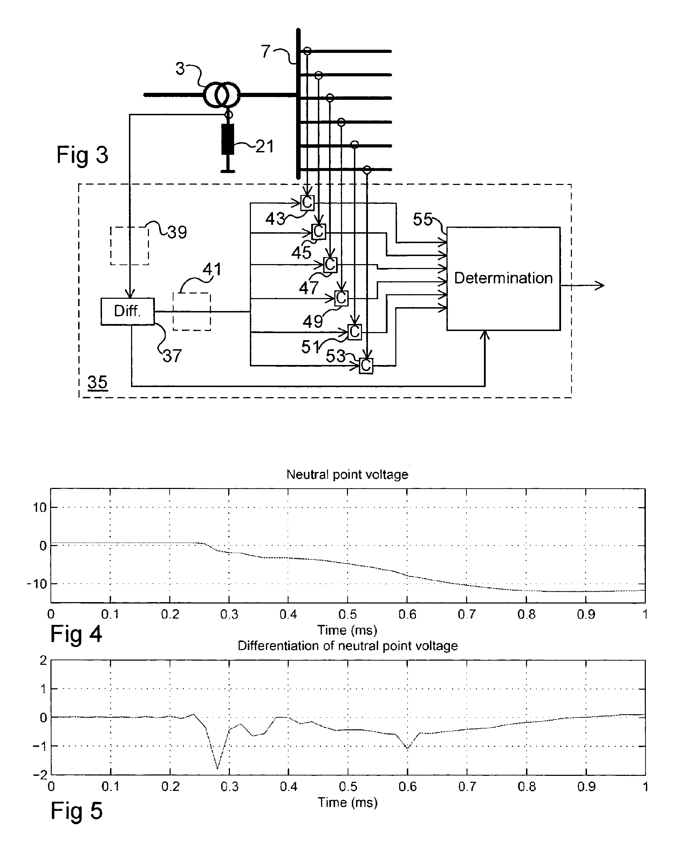

Fig 3 illustrates schematically the layout of a monitoring device 35. In general the monitoring device may be accomplished by means of a digital signal processor running a software, by means of a field programmable gate array, FPGA, or even as a truly analog arrangement, by means of operational amplifiers. In general, an FGPA is considered a preferred solution, but as mentioned other realizations are within the reach of the skilled person. In any case, the monitoring device will comprise a number of functional blocks carrying out the actions indicated in fig 2.

The voltage over the Petersen coil is sampled and measured, as is well known per se, and its first order derivative is accomplished by a differentiating unit or block 37. Fig 4 shows a graph of a neutral voltage during a time frame of 1 ms where an intermittent earth fault occurs. It should be noted that an intermittent fault often occurs when the voltage of the damaged phase is close to its peak. The total time frame illustrated in fig 4 and the following graphs is one tenth of a 50 Hz half period. Fig 5 shows the first order derivative of the neutral voltage during the time frame in question.

The information in the measured signal that is useful for finding the damaged feeder resides to a great extent in the transient caused by the intermittent earth fault that will mainly comprise high frequency components as compared to the grid frequency. It may therefore be preferred to exclude low frequencies, such as any influence from the 50 Hz grid frequency from the analysis. This may be done by means of an optional low pass filter 39, filtering the neutral voltage. Another option is to provide a threshold block 41, which sets all derivative readings with amplitudes smaller than a predetermined threshold to zero, i.e. effectively disregarding slow (non-transient) changes in the neutral voltage. This will also filter out any effects of the grid frequency components as well as its harmonic components (mainly odd multiples of the grid frequency).

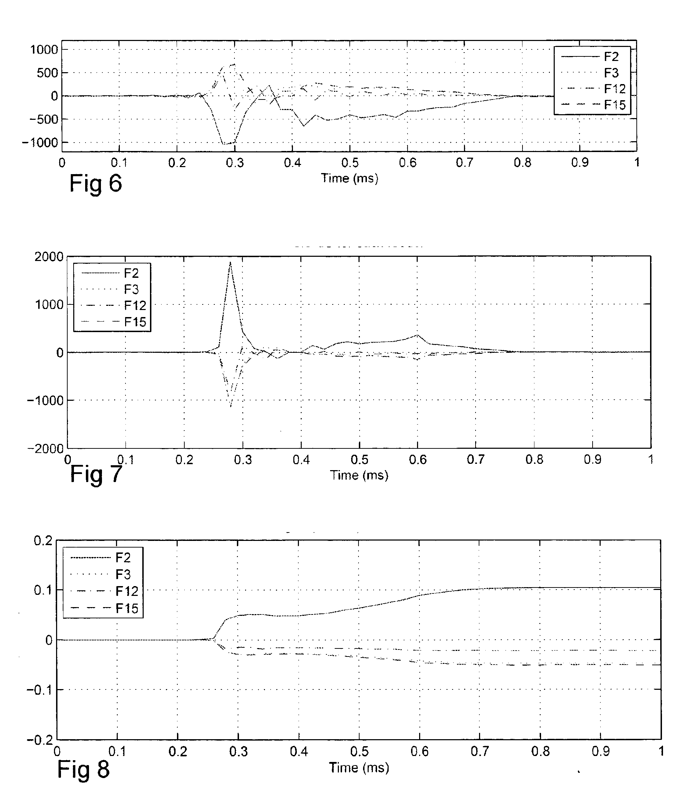

Fig 6 shows the currents of a set of feeder cables, denoted F2, F3, F12, and F15 during the time frame of figs 4 and 5. The currents are the zero currents of each of those cables.

By means of a number of correlation blocks 43-53, the correlations between the Petersen coil voltage's first order derivative and each of the monitored cables' currents are determined. By a correlation is here meant a sample-wise multiplication of the differentiated voltage with the current. The resulting product may in principle be standardized even if this is not necessary.

Fig 7 illustrates the correlation of each of the cable currents of fig 6 with the first order derivative of the neutral voltage of fig 5. Those correlations are fed to a determination block 55.

As can be seen in fig 7, which shows the correlations for the different feeder cables, the correlation of the faulty cable (F2) is highly positive, whereas the correlations for all the other cables are negative. This is due to the facts that all currents are to be considered capacitive for the short duration of the intermittent fault.

The determination block 55 of fig 3 can thus determine which cable is about to break down by comparing the received correlation with a positive threshold at one or a few instants (consecutive or non-consecutive).

A further measure to increase the reliability of the monitoring device is to integrate the received correlation over a period of time. This makes the determination even clearer. Fig 8 shows the integrals of each of the signals depicted in fig 7, integrated over the entire duration of an intermittent fault transient. There it is clearly shown that the feeder cable F2 has the greatest correlation over time and was the cable that caused the intermittent earth fault.

The determination block 55 timing can be determined by the output from the differentiating unit 37, as illustrated in fig 3. This means that the correlations can be compared with the threshold when the differentiated signal exceeds another threshold or that the same condition can cause an integrating operation to commence.

In summary, the present disclosure relates to a method and a corresponding monitoring device for detecting earth faults in a power distribution system, where a busbar feeds power to a plurality of feeding loops, and a distribution grid feeds power to the busbar via a transformer. The secondary side of the transformer is connected to earth via a Petersen coil. The Petersen coil voltage and the feeding loop currents are measured, and the first order derivative of the Petersen coil voltage is determined. This derivative is correlated with each of the feeding loop currents, and the feeding loop with the highest correlation over a predetermined time is detected as having an earth fault. This provides a simple but yet reliable scheme for detecting an intermittent earth fault, such that measures can be taken to replace a damaged cable before it breaks down permanently.

The invention is not restricted to the described embodiment. It may be varied and altered in different ways within the scope of the appended claims.

## Claims

1. A method for detecting earth faults in a power distribution system, wherein a busbar feeds power to a plurality of feeding loops, wherein a distribution grid feeds power to the busbar via a transformer, the secondary side of which is connected to earth via a Petersen coil (21), and wherein the Petersen coil voltage and the feeding loop currents are measured (25, 27) to provide an earth fault indication, **characterised by**
- providing (29) the first order derivative of the Petersen coil voltage as a differential signal,
- correlating (31) the differential signal with the feeding loop currents to provide correlation results, and
- indicating (33) the feeding loop with the highest positive correlation as having an earth fault.

2. A method as claimed in claim 1, wherein the indicating includes comparing the correlation results with a first, positive threshold, and indicating the feeding loop exceeding the first threshold as exhibiting an earth fault.

3. A method as claimed in claim 1 or 2, wherein the correlation results are integrated for a period of time and the feeding loop with the highest integrated correlation is indicated as exhibiting an earth fault.

4. A method according to any of the preceding claims, wherein the Petersen coil voltage signal is high-pass filtered to remove the grid frequency.

5. A method according to any of the preceding claims, wherein the differentiated signal is set to zero unless it exceeds a second threshold.

6. A method according to any of the preceding claims, wherein the indication is triggered by the differentiated signal exceeding a third threshold.

7. A monitoring device for detecting earth faults in a power distribution system, wherein a busbar (7) feeds power to a plurality of feeding loops (9-19), wherein a distribution grid feeds power to the busbar via a transformer (3), the secondary side of which is connected to earth via a Petersen coil (21), and wherein the Petersen coil voltage and the feeding loop currents are measured to provide an earth fault indication, the device comprising a differentiating unit (37) for providing the first order derivative of the Petersen coil voltage and being **characterised by**
- correlation units (43-53) for correlating the first order derivative with the feeding loop currents, and
- a determination unit (55) indicating the feeding loop with the highest positive correlation as having an earth fault.

## Patentansprüche

1. Verfahren zur Detektion von Erdschlüssen in einem Leistungsverteilungssystem, wobei eine Sammelschiene Leistung in mehrere Einspeiseschleifen einspeist, wobei ein Verteilernetz Leistung in die Sammelschiene über einen Transformator einspeist, dessen Sekundärseite über eine Petersenspule (21) geerdet ist, und wobei die Petersenspulenspannung und die Einspeiseschleifenströme gemessen werden (25, 27), um eine Erdschlussanzeige bereitzustellen, **gekennzeichnet durch** das
- Bereitstellen (29) der Ableitung erster Ordnung der Petersenspulenspannung als ein Differenzialsignal,
- Korrelieren (31) des Differenzialsignals mit den Einspeiseschleifenströmen, um Korrelationsergebnisse bereitzustellen, und
- Anzeigen (33) der Einspeiseschleife mit der höchsten positiven Korrelation als diejenige mit einem Erdschluss.

2. Verfahren nach Anspruch 1, wobei das Anzeigen einschließt:
Vergleichen der Korrelationsergebnisse mit einem ersten, positiven Schwellenwert und Anzeigen der Einspeiseschleife, die den ersten Schwellenwert überschreitet, als diejenige, die einen Erdschluss aufweist.

3. Verfahren nach Anspruch 1 oder 2, wobei die Korrelationsergebnisse über einen Zeitraum integriert werden und die Einspeiseschleife mit der höchsten aufintegrierten Korrelation als diejenige angezeigt wird, die einen Erdschluss aufweist.

4. Verfahren nach einem der vorhergehenden Ansprüche, wobei das Petersenspulen-Spannungssignal hochpassgefiltert wird, um die Netzfrequenz zu beseitigen.

5. Verfahren nach einem der vorhergehenden Ansprüche, wobei das differenzierte Signal auf null gesetzt wird, wenn es einen zweiten Schwellenwert nicht überschreitet.

6. Verfahren nach einem der vorhergehenden Ansprüche, wobei die Anzeige durch das differenzierte Signal ausgelöst wird, das einen dritten Schwellenwert überschreitet.

7. Überwachungsvorrichtung zur Detektion von Erdschlüssen in einem Leistungsverteilungssystem, wobei eine Sammelschiene (7) Leistung in mehrere Einspeiseschleifen (9-19) einspeist, wobei ein Verteilernetz Leistung in die Sammelschiene über einen Transformator (3) einspeist, dessen Sekundärseite über eine Petersenspule (21) geerdet ist, und wobei die Petersenspulenspannung und die Einspeiseschleifenströme gemessen werden, um eine Erdschlussanzeige bereitzustellen, wobei die Vorrichtung eine Differenziereinheit (37) zum Bereitstellen der Ableitung erster Ordnung der Petersenspulenspannung aufweist und **gekennzeichnet ist durch**
- Korrelationseinheiten (43-53) zum Korrelieren der Ableitung erster Ordnung mit den Einspeiseschleifenströmen und
- eine Bestimmungseinheit (55) zum Anzeigen der Einspeiseschleife mit der höchsten positiven Korrelation als diejenige mit einem Erdschluss.

## Revendications

1. Procédé pour détecter des défauts de terre dans un système de distribution d'énergie, dans lequel un jeu de barres fournit de l'énergie à une pluralité de boucles d'alimentation, dans lequel un réseau de distribution fournit de l'énergie au jeu de barres par l'intermédiaire d'un transformateur dont le côté secondaire est relié à la terre par l'intermédiaire d'une bobine de Petersen (21), et dans lequel la tension de la bobine de Petersen et les intensités des boucles d'alimentation sont mesurées (25, 27) pour fournir une indication de défaut de terre, **caractérisé par** :
- la fourniture (29) de la dérivée de premier ordre de la tension de la bobine de Petersen sous la forme d'un signal différentiel,
- la corrélation (31) du signal différentiel avec les intensités des boucles d'alimentation pour fournir des résultats de corrélation, et
- l'indication (33) que la boucle d'alimentation avec la plus grande corrélation positive a un défaut de terre.

2. Procédé selon la revendication 1, dans lequel l'indication comprend la comparaison des résultats de corrélation à un premier seuil positif, et l'indication que la boucle d'alimentation dépassant le premier seuil présente un défaut de terre.

3. Procédé selon la revendication 1 ou 2, dans lequel les résultats de corrélation sont intégrés pour une période de temps et il est indiqué que la boucle d'alimentation avec la plus grande corrélation intégrée présente un défaut de terre.

4. Procédé selon l'une quelconque des revendications précédentes, dans lequel le signal de tension de la bobine de Petersen est filtré passe-haut pour enlever la fréquence de réseau.

5. Procédé selon l'une quelconque des revendications précédentes, dans lequel le signal différencié est réglé à zéro à moins qu'il ne dépasse un deuxième seuil.

6. Procédé selon l'une quelconque des revendications précédentes, dans lequel l'indication est déclenchée par le dépassement d'un troisième seuil par le signal différencié.

7. Dispositif de surveillance pour détecter des défauts de terre dans un système de distribution d'énergie, dans lequel un jeu de barres (7) fournit de l'énergie à une pluralité de boucles d'alimentation (9-19), dans lequel un réseau de distribution fournit de l'énergie au jeu de barres par l'intermédiaire d'un transformateur (3) dont le côté secondaire est relié à la terre par l'intermédiaire d'une bobine de Petersen (21), et dans lequel la tension de la bobine de Petersen et les intensités des boucles d'alimentation sont mesurées pour fournir une indication de défaut de terre, le dispositif comprenant une unité de différenciation (37) pour fournir la dérivée de premier ordre de la tension de la bobine de Petersen et étant **caractérisé par** :
- des unités de corrélation (43-53) pour effectuer la corrélation de la dérivée de premier ordre avec les intensités des boucles d'alimentation, et
- une unité de détermination (55) pour effectuer l'indication que la boucle d'alimentation avec la plus grande corrélation positive a un défaut de terre.
